# EUROPÄISCHE PATENTANMELDUNG

(11) **EP 1 898 098 A2**
(43) Veröffentlichungstag der Anmeldung: **12.03.2008**
(21) Anmeldenummer: 07114254.1
(22) Anmeldetag: 13.08.2007
(51) Int. Cl.: F04D 19/04, F04D 27/02

(54) **Vakuumpumpe**

(30) Priorität: 01.09.2006 DE 102006041183
(71) Anmelder: Oerlikon Leybold Vacuum GmbH, 50968 Köln (DE)
(72) Erfinder: Harig, Christian, 51105, Köln (DE); Jung, Ulrich, 65551, Limburg (DE)
(74) Vertreter: Eberlein, Jasper

(57) **Zusammenfassung**

Die Erfindung bezieht sich auf eine Vakuumpumpe (10) mit einem Pumpenrotor (16), aktiven Magnetlagern (20, 21) zur Lagerung des Pumpenrotors, Fanglagern (22, 23), die den Magnetlagern (20, 21) zugeordnet sind, einem elektrischen Antriebsmotor (18) mit Motorspulen (19₁, 19₂, 19₃) zum Antrieb des Pumpenrotors (16) und einem Bremsrelais (42). Ferner sind Bremswiderstände (50, 51, 52) vorgesehen, die über einen Relais-Kontakt (45, 46, 47) des Bremsrelais (42) mit den Motorspulen (19₁, 19₂, 19₃) über einen ersten Wechsler-Kontakt (45, 46, 47) des Bremsrelais (42) mit dem Bremswiderstand (50, 51, 52) und über einen zweiten Wechsler-Kontakt (47, 48, 49) des Bremsrelais (42) mit einem Wechselrichter-Modul (32) verbunden sind.

## Beschreibung

Die Erfindung bezieht sich auf eine schnelllaufende magnetgelagerte Vakuumpumpe mit Fanglagern.

Schnelllaufende Vakuumpumpen, beispielsweise Turbomolekular-Vakuumpumpen, werden mit Nenndrehzahlen von mehreren 10.000 bis zu 100.000 U/min betrieben. Für derartige Vakuumpumpen eignen sich insbesondere reibungsfreie Magnetlager zur Lagerung des Pumpenrotors. Bei Ausfall des Magnetlagers, bei Stößen und immer dann, wenn die Magnetiagerung ihrer Aufgabe nicht oder nicht vollständig nachkommen kann, wird der Pumpenrotor von einem oder mehreren zugeordneten mechanischen Fanglagern gestützt, die als Wälz- oder Gleitlager ausgebildet sein können. Ein vollständiger Auslauf einer zuvor mit Nenndrehzahl laufenden Vakuumpumpe kann mehrere Stunden dauern. Hierbei werden die Fanglager erheblich beansprucht, so dass diese nur wenige Vollausläufe vertragen. Aufgabe der Erfindung ist es demgegenüber, eine Vakuumpumpe zu schaffen, bei der die Fanglager bei Ausfällen der Magnetlager zuverlässig geschont werden.

Diese Aufgabe wird erfindungsgemäß gelöst mit den Merkmalen des Patentanspruches 1.

Die erfindungsgemäße Vakuumpumpe weist einen Bremswiderstand und ein Bremsrelais auf, durch das die Motorspulen des Antriebsmotors im Falle einer Störung auf den Bremswiderstand bzw. die Bremswiderstände geschaltet werden. Das Bremsrelais weist zwei Wechsler-Kontakte eines Wechslers auf, wobei die Motorspulen jeweils über einen ersten Wechsler-Kontakt des Bremsrelais mit dem Bremswiderstand und über einen zweiten Wechsler-Kontakt desselben Wechslers mit einem Wechselrichter-Modul verbunden sind. In dem Wechselrichter-Modul wird das für den Betrieb des Antriebsmotors benötigte elektrische Bestromungsmuster erzeugt. Bei störungsfreiem Betrieb sind die Motorspulen über den zweiten Wechsier-Kontakt bzw. die zweiten Wechsler-Kontakte des Bremsrelais mit dem Wechselrichter-Modul verbunden, das für die einzelnen Motorspulen entsprechende Bestromungsmuster generiert. Für jede Motorspule ist jeweils ein entsprechender Wechsler vorgesehen.

Im Falle einer Störung bzw. eines Fehlers wird das Bremsrelais in seinen Fehlerzustand umgeschaltet, so dass die Motorspulen nicht mehr mit dem Wechselrichter-Modul, sondern ausschließlich mit dem Bremswiderstand bzw. mit den Bremswiderständen verbunden sind. Durch die einfache Ausbildung des Bremsrelais als Wechsler und die einfache Umschaltung im Fehler- bzw. störungsfall von einer Verbindung Motorspule/Wechselrichter-Modul zu einer alternativen Verbindung Motorspule/Bremswiderstand wird auf sehr einfache Weise eine zuverlässige Umschaltung für den Fehlerfall zur Verfügung gestellt.

Nach der Umschaltung des Bremsrelais in den Fehlerzustand arbeitet der Antriebsmotor als Generator. Die von dem Generator in den Antriebsmotor-Motorspulen erzeugte elektrische Energie wird dann zu dem Bremswiderstand bzw. den Bremswiderständen geleitet, wo die generierte elektrische Energie in Wärme umgewandelt und abgeführt wird. Der Bremswiderstand bzw. die Bremswiderstände können beispielsweise gut wärmeleitend mit dem Vakuumpumpen-Gehäuse verbunden sein, so dass das Vakuumpumpen-Gehäuse als Wärmesenke für den Bremswiderstand bzw. die Bremswiderstände dient.

An der gesamten Brems-Anordnung, bestehend aus dem Bremsrelais und dem Brems-Widerstand sind im wesentlichen nur als äußerst robust bekannte passive elektrische Komponenten beteiligt, nämlich elektrische Widerstände, ein Relais sowie elektrische Leitungen.

Im Fehlerfall wird durch die sofortige Aufschaltung der Bremswiderstände auf die Motorspulen eine schnelle Drehzahlverringerung realisiert.

Vorzugsweise ist der erste Wechsler-Kontakt ein Ruhe-Kontakt und ist der zweite Wechsler-Kontakt ein Arbeits-Kontakt des Bremsrelais. Grundsätzlich kann der Bremswiderstand bzw. können die Bremswiderstände auch über den bzw. die Arbeits-Kontakte des Bremsrelais mit den Motorspulen verschaltet sein. Allerdings würde eine solche Anordnung bei Ausfall der Energieversorgung für den Betrieb des Bremsrelais dafür sorgen, dass das Bremsrelais nicht mehr in den Fehlerzustand gebracht werden könnte. Es ist daher vorteilhaft, für die Verbindung der Motorspulen mit dem Bremswiderstand bzw. den Bremswiderständen die Ruhe-Kontakte des Bremsrelais zu verwenden.

Gemäß einer bevorzugten Ausgestaltung ist eine Relais-Steuerung zur Steuerung des Bremsrelais vorgesehen, die einen Fehlermeldungs-Eingang aufweist, der mit einem elektrischen Modul verbunden ist, wobei die Relais-Steuerung das Bremsrelais in einen Fehlerzustand schaltet, wenn an einem Fehlermeldungseingang ein Fehlermeldungs-Signal mindestens eines elektrischen Moduls anliegt. Ein elektrisches Modul in diesem Sinne kann das Wechselrichter-Modul sein, ein Rechner-Modul, ein Watchdog-Modul, das den Betrieb des Rechner-Modules überwacht, ein Netzteil-Modul und/oder ein Magnetlagersteuerungs-Modul sein. Jedes der genannten Module ist bevorzugt mit einer eigenen Signalleitung an einem eigenen Fehlermeldungs-Eingang der Relais-Steuerung angeschlossen.

Die Relais-Steuerung ist ein eigenes Modul, das das Bremsrelais steuert. Die Relais-Steuerung weist mehrere Fehlermeldungs-Eingänge auf, die jeweils mit einem elektrischen Modul der Vakuumpumpe verbunden sind, die mit dem Betrieb des Pumpenrotors direkt oder indirekt zu tun haben, und insbesondere mit dem Betrieb des Magnetlagers und des Antriebsmotors zu tun haben. Wenn nur ein einziges der auf diese Weise mit einem Fehlermeldungs-Eingang der Relais-Steuerung verbundenes Modul eine Fehlermeldung an die Relais-Steuerung meldet, wird das Bremsrelais in den Fehlerzustand geschaltet.

Durch die sofortige Abtrennung des Wechselrichter-Moduls von den Motorspulen wird verhindert, dass, insbesondere für den Fall, dass das Wechselrichter-Modul selbst fehlerhaft und Ursache für Zerstörungsgefahr ist, nach Detektion einer derartigen Störung das Wechselrichter-Modul nicht mehr schädigend wirken kann.

Vorzugsweise ist das Bremsrelais ein mechanisches Relais. Nur ein mechanisches Relais bietet, im Gegensatz zu einem elektronischen Relais, die Möglichkeit einer echten galvanischen Trennung der Motorspulen des Antriebsmotors von der übrigen Steuerung und Regelung der Vakuumpumpe, und fällt bei völligem Ausfall der Energieversorgung selbsttätig in einen Ruhezustand, der bevorzugt der Fehlerzustand ist, und ist weitgehend sicher gegen ein Durchbrennen und unerwünschten Kurzschluss der Wechsler-Kontakte.

Gemäß einer bevorzugten Ausgestaltung ist dem Bremswiderstand ein Temperatursensor zugeordnet, wobei ein Leistungsschalter die über den Bremswiderstand bzw. die Bremswiderstände abgebaute elektrische Leistung temperaturabhängig beeinflusst. Hierdurch wird eine Überhitzung des Bremswiderstandes bzw. der Bremswiderstände vermieden. Der Leistungsschalter kann auch stufenlos ausgebildet sein.

Die Einleitung des Fehler- bzw. Bremszustandes erfolgt nicht unmittelbar durch das Wechselrichter-Modul. Bei Ausfall des Wechselrichter-Moduls wird die Funktionalität des Bremsrelais bzw. der Relais-Steuerung nicht beeinträchtigt.

Das Bremsrelais ist in seinem Normalzustand, in dem der bzw. die zweiten Wechsler-Kontakte geschlossen sind, die die Motorspulen mit dem Wechselrichter-Modul verbinden, wenn
- die elektrische Spannungsversorgung nicht eine zu niedrige oder zu hohe Spannung zur Verfügung stellt,
- das Rechner-Modul nicht einen Fehler in irgendeinem der anderen Module festgestellt hat,
- das Watchdog-Modul, das seinerseits den korrekten Betrieb des Rechner-Modules überwacht, keinen Fehler feststellt, und
- keine wichtige elektrische Leitung zwischen einer Pumpeneinheit und einer Steuereinheit unterbrochen ist.

Selbstverständlich können weitere Module und Bauteile der Vakuumpumpe mit einem Fehlermeldungs-Eingang der Relais-Steuerung verbunden sein.

Der Bremswiderstand kann ein linearer, d. h. ein weitgehend temperaturkonstanter Widerstand sein, kann jedoch auch als nicht-linearer Widerstand, beispielsweise als Kaltleiter, ausgebildet sein. Der Bremswiderstand kann auch ein komplexer Widerstand sein.

Vorzugsweise sind die Fanglager als Gleitlager ausgebildet. Gleitlager sind grundsätzlich preiswerter als Wälzlager. Durch die zuverlässige Abbremsung des Pumpenrotors im Fehlerfall wird der Verschleiß des Gleitlagers erheblich reduziert. Hierdurch kann auch für hohe Nenndrehzahlen und hohe Pumpenrotor-Massen ein relativ preiswertes Gleitlager als Fanglager verwendet werden.

Gemäß einer bevorzugten Ausgestaltung der Erfindung ist die Vakuumpumpe eine Turbomolekular-Vakuumpumpe. Turbomolekular-Vakuumpumpen werden üblicherweise bei sehr hohen Drehzahlen von mehreren 10.000 U/min betrieben und sind daher prädestiniert für den Einsatz eines Magnetlagers, dem jeweils ein entsprechendes mechanisches Fanglager zugeordnet ist.

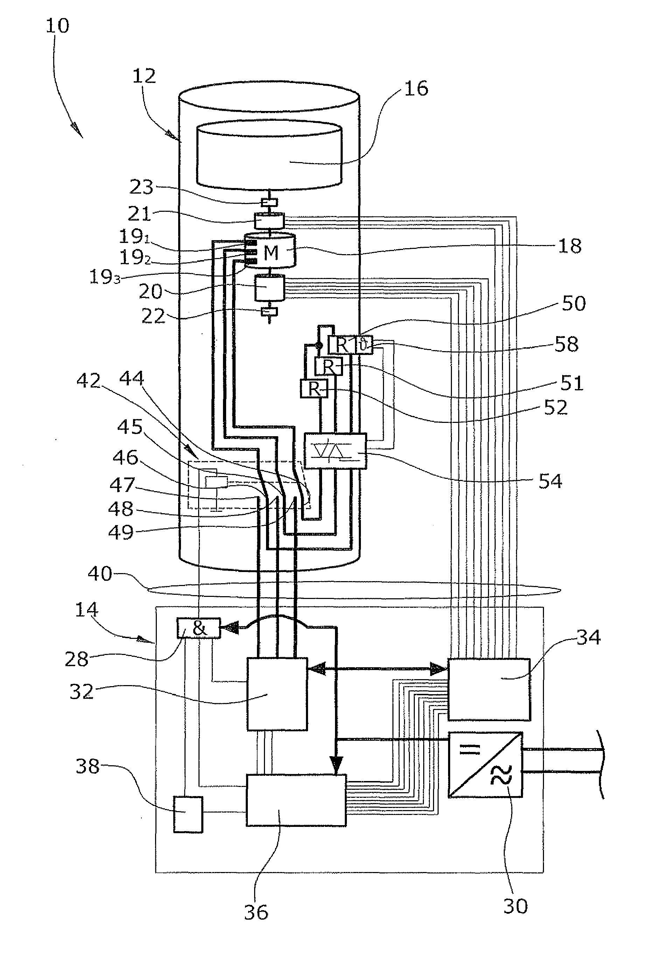

Im Folgenden wird unter Bezugnahme auf die Zeichnung ein Ausführungsbeispiel der Erfindung näher erläutert.

Die Figur zeigt schematisch eine Vakuumpumpe mit einem Bremsrelais, das die Motorspulen des Antriebsmotors im Fehlerfall auf Bremswiderstände schaltet.

In der Figur ist eine Turbomolekular-Vakuumpumpe 10 dargestellt, die aus einer Pumpeneinheit 12 und einer Steuereinheit 14 besteht, die durch elektrische Verbindungsleitungen 40 miteinander verbunden sind.

Die Vakuumpumpe 10 weist in ihrer Pumpeneinheit einen Pumpenrotor 16 auf, der von einem Antriebsmotor 18 mit einer Nenndrehzahl von bis zu 100.000 U/min angetrieben wird. Die Rotorwelle ist magnetisch in zwei Magnetlagern 20, 21 gelagert, die jeweils mehrachsig sind und zusammen eine fünfachsige Magnetlagerung bilden. Den Magnetlagern 20, 21 sind zwei Fanglager 22, 23 zugeordnet, die als mechanische Gleitlager oder Wälzlager ausgebildet sind.

Der Antriebsmotor 18 ist ein dreiphasiger DC-Brushless-Motor und weist drei Stator-Motorspulen 19₁, 19₂, 19₃ auf. Der Antriebsmotor kann jedoch auch als Asynchronmaschine oder als Reluktanz-Motor ausgebildet sein.

Die Pumpeneinheit 12 weist ferner ein Bremsrelais 42 auf, das drei Wechsler aufweist und die drei Motorspulen 19₁, 19₂, 19₃ jeweils auf einen Arbeits-Kontakt 47, 48, 49 oder einen Ruhe-Kontakt 44, 45, 45 schaltet.

Die Ruhe-Kontakte 44, 45, 46, sind über einen Leistungsschalter 54 jeweils mit einem Bremswiderstand 50, 51, 52 verbunden. Die Bremswiderstände 50, 51, 52 sind wärmeleitend mit dem Gehäuse der Pumpeneinheit 12 verbunden, so dass das Gehäuse als Kühlkörper bzw. als Wärmesenke für die Bremswiderstände 50, 51, 52 dient.

Der Leistungsschalter 54 ist mit einem Temperatursensor 58 gekoppelt, der an einem der Bremswiderstände 50 befestigt ist. Bei drohender Überhitzung des Bremswiderstandes 50 wird der Leistungsschalter 54 geöffnet, und wird erst wieder geschlossen, wenn die von dem Temperatursensor 58 ermittelte Temperatur des Bremswiderstandes wieder auf eine zulässige Temperatur abgesunken ist. Der Leistungsschalter kann auch stufenlos die Bremsleistung regelnd ausgelegt sein.

Die Steuereinheit 14 weist ein Netzteil-Modul 30 zur Spannungsversorgung aller übrigen Module und Bauteile, ein Wechselrichter-Modul 32 zur Betromung der Motorspulen 19₁, 19₂, 19₃ , ein Magnetlagersteuerungs-Modul 34 zur Steuerung der Magnetlager 20, 21, ein Rechner-Modul 36 zur Steuerung und Überwachung insbesondere des Magnetlagersteuerungs-Moduls 34 und des Wechselrichter-Moduls 32, ein Watchdog-Modul 38 zur Überwachung der Funktionalität des Rechner-Modules 36 sowie eine Relais-Steuerung 28 zur Steuerung des Bremsrelais 42 auf.

Die Relais-Steuerung 28 weist mehrere Fehlermeldungs-Eingänge auf, die über entsprechende elektrische Signalleitungen mit dem Wechselrichter-Modul 32, dem Rechner-Modul 36 und dem Watchdog-Modul 38 verbunden sind. Wenn nur eines der drei vorgenannten Module 32, 36, 38 ein Fehler-Signal an den betreffenden Fehlermeldungs-Eingang der Relais-Steuerung 28 sendet, schaltet die Relais-Steuerung 28 das Bremsrelais 42 in den Fehler- bzw. Ruhezustand, der in der Figur dargestellt ist. Das Bremsrelais 42 ist ein rein mechanisches Relais.

Auch das Magnetlagersteuerungs-Modul 34 und das Netzteil-Modul 30 können optional über eine entsprechende Signalleitung mit einem Fehlermeldungs-Eingang der Relais-Steuerung 28 verbunden sein.

Die Fanglager 22, 23 sind als Gleitlager oder Wälzlager ausgebildet.

Der Pumpenrotor 16 kann alternativ auch lediglich ein-, zwei-, drei- oder vierachsig aktiv magnetisch gelagert sein, während die übrigen Achsen passiv oder mechanisch gelagert sind.

Das Watchdog-Modul 38 wird durch das Rechner-Modul 36 in regelmäßigen Intervallen von typischerweise einigen Mikrosekunden bis Millisekunden benachrichtigt. Bleibt das vereinbarte Benachrichtigungs-Signal aus, gibt das Watchdog-Modul ein Fehler-Signal an die Relais-Steuerung 28 aus.

Ebenso kann das Wechselrichter-Modul 32 und/oder das Rechner-Moduf 36 direkt ein Fehler-Signal an die Relais-Steuerung 28 ausgeben, wenn die vorgenannten Module 32, 36 intern oder extern Unregelmäßigkeiten feststellen, die ein sofortiges Stoppen der Vakuumpumpe und Abbremsen des Pumpenrotors 16 bzw. des Motorrotors über die Bremswiderstände 50, 51, 52 rechtfertigen.

Das Rechner-Modul 36 überwacht auch die Funktion des Magnetlagersteuerungs-Moduls 34 und des Netzteil-Moduls 30 entsprechend.

Im Falle einer Unterbrechung der elektrischen Verbindungsleitungen 40 zwischen der Pumpeneinheit 12 und der Steuereinheit 14 fällt das Bremsrelais 42 selbsttätig in den Ruhezustand, so dass auch für diesen Fall die Motorspulen 19₁, 19₂, 19₃ auf die Bremswiderstände 50, 51, 52 geschaltet werden.

## Patentansprüche

1. Vakuumpumpe (10) mit einem Pumpenrotor (16), einem aktiven Magnetlager (20, 21), einem dem Magnetlager (20, 21) zugeordneten Fanglager (22, 23), einem elektrischen Antriebsmotor (18) mit Motorspulen (19₁, 19₂, 19₃) zum Antrieb des Pumpenrotors (16), einem Bremsrelais (42) und einem Bremswiderstand (50, 51, 52), der über einen Kontakt (45, 46, 47) des Bremsrelais (42) mit den Motorspulen (19₁, 19₂, 19₃) verbunden werden kann,
wobei die Motorspulen (19₁, 19₂, 19₃) über einen ersten Wechsler-Kontakt (45, 46, 47) des Bremsrelais (42) mit dem Bremswiderstand (50, 51, 52) und über einen zweiten Wechsler-Kontakt (47, 48, 49) des Bremsrelais (42) mit einem Wechselrichter-Modul (32) verbunden sind.

2. Vakuumpumpe nach Anspruch 1, **dadurch gekennzeichnet, dass** der erste Wechsler-Kontakt (44, 45, 46,) ein Ruhe-Kontakt und der zweite Wechsler-Kontakt (47, 48, 49) ein Arbeitskontakt ist.

3. Vakuumpumpe nach Anspruch 1 oder 2, **dadurch gekennzeichnet, dass** eine Relais-Steuerung (28) vorgesehen ist, die einen Fehlermeldungs-Eingang aufweist, der mit einem elektrischen Modul (32, 36, 38) verbunden ist, wobei die Relais-Steuerung (28) das Bremsrelais (42) in einen den ersten Wechsler-Kontakt (44, 45, 46,) schließenden Fehlerzustand schaltet, wenn an einem Fehlermeldungs-Eingang ein Fehler-Signal mindestens eines elektrischen Moduls (32, 36, 38) anliegt.

4. Vakuumpumpe nach einem der Ansprüche 1 - 3, **dadurch gekennzeichnet, dass** das elektrische Modul ein Wechselrichter-Modul (32), ein Rechner-Modul (36), ein Watchdog-Modul (38), das den Betrieb des Rechner-Moduls (36) überwacht, ein Netzteil-Modul (30) und/oder ein Magnetiagersteuerungs-Modul (34) ist, wobei jedes Modul (32, 36, 38) mit einer eigenen Signalleitung an einen Fehlermeldungs-Eingang der Relais-Steuerung (28) angeschlossen ist.

5. Vakuumpumpe nach einem der Ansprüche 1 - 4, **dadurch gekennzeichnet, dass** das Bremsrelais (42) ein mechanisches Relais ist.

6. Vakuumpumpe nach einem der Ansprüche 1 - 5, **dadurch gekennzeichnet, dass** dem Bremswiderstand (50, 51, 52) ein Temperatursensor (58) zugeordnet ist, wobei ein Leistungsschalter (54) die über den Bremswiderstand (50, 51, 52) abgebaute elektrische Leistung abhängig von der durch den Temperatursensor (58) gemessenen Temperatur beeinflusst.

7. Vakuumpumpe nach einem der Ansprüche 1 - 6, **dadurch gekennzeichnet, dass** der Bremswiderstand ein nicht-linearer Widerstand ist.

8. Vakuumpumpe nach einem der Ansprüche 1 - 6, **dadurch gekennzeichnet, dass** der Bremswiderstand ein komplexer Widerstand ist.

9. Vakuumpumpe nach einem der Ansprüche 1 - 8, **dadurch gekennzeichnet, dass** die Fanglager (22, 23) als Gleitlager ausgebildet sind.

10. Vakuumpumpe nach einem der Ansprüche 1 - 9, **dadurch gekennzeichnet, dass** die Vakuumpumpe (10) eine Turbomolekular-Vakuumpumpe ist.
